# EUROPÄISCHE PATENTSCHRIFT

(11) **EP 2 279 111 B1**
(45) Veröffentlichungstag und Bekanntmachung des Hinweises auf die Patenterteilung: **02.04.2014**
(21) Anmeldenummer: 09765707.6
(22) Anmeldetag: 22.05.2009
(51) Int. Cl.: B63G 8/08

(54) **UNTERSEEBOOT MIT EINEM PROPULSIONSANTRIEB MIT EINEM ELEKTRORINGMOTOR**
SUBMARINE WITH A PROPULSIVE DERIVE COMPRISING AN ANNULAR ELECTRIC MOTOR
SOUS-MARIN DOTÉ D'UN MÉCANISME DE PROPULSION COMPORTANT UN MOTEUR ANNULAIRE ÉLECTRIQUE

(30) Priorität: 27.05.2008 DE 102008025211
(43) Veröffentlichungstag der Anmeldung: 02.02.2011
(73) Patentinhaber: Siemens Aktiengesellschaft, 80333 München (DE)
(72) Erfinder: SCHRÖDER, Dierk, 24238 Selent (DE)
(86) Internationale Anmeldenummer: PCT/EP2009/056234
(87) Internationale Veröffentlichungsnummer: WO 2009/153127

(56) Entgegenhaltungen:
- EP-A1- 1 739 007
- GB-A- 1 197 850
- US-A- 5 078 628
- US-A- 5 185 545
- US-A- 5 722 864
- US-B1- 7 353 768

## Beschreibung

Die Erfindung betrifft ein Unterseeboot mit einem Propulsionsantrieb gemäß Patentanspruch 1.

Aktuelle bemannte militärische Unterseeboote (U-Boote) weisen für den Vortrieb üblicherweise als Propulsionsantrieb einen im Unterseeboot angeordneten Elektromotor auf, der über eine Propellerwelle einen in Längsrichtung des Bootes in Verlängerung des Hecks außerhalb der Bootshülle angeordneten Propeller antreibt. Die Propellerwelle muss hierzu im Heck des Unterseebootes die Hülle des Unterseebootes durchdringen. Die Abdichtung an der Durchdringungsstelle erfolgt dabei üblicherweise mit einer Wellendichtung. Bei manchen Typen von Unterseebooten können auch zwei Propellerwellen im Heck durch die Bootshülle geführt sein und zwei nebeneinander in Längsrichtung des Bootes in Verlängerung des Hecks außerhalb der Bootshülle angeordnete Propeller antreiben (je einen Propeller auf Steuerbord- und Backbordseite).

Nachteilig bei einem derartigen Propulsionsantrieb ist die relativ große Geräuschabstrahlung des Propellers, die eine Ortbarkeit des Unterseebootes erleichtert. Außerdem kann in großen Tiefen bereits eine kleine Beschädigung an der Wellendichtung zu Problemen für das Unterseeboot führen. Weiterhin kann ein Torpedotreffer oder eine andere Beschädigung im Heck des Unterseebootes bei drehender Propellerwelle dazu führen, dass sich die Welle verbiegt und dadurch das Heck des Unterseebootes in solcher Weise aufreißt, dass es zu einem Totalverlust des Unterseebootes kommt.

US 7 353 768 Bl offenbart ein Unterwasserfahrzeug mit einer Welle, an der ein Propeller angeordnet ist, und einen Generator/Motor, der einen Stator und einen an den Propeller gekoppelten Rotor aufweist. Das Unterwasserfahrzeug umfasst ferner wenigstens einen mit dem Generator/Motor verbundenen Energiespeicher und eine Steuereinheit, mittels derer der Betriebsmodus des Generators/Motors eingestellt werden kann, wobei ein Auflademodus, ein Antriebsmodus und ein Leerlaufmodus eingestellt werden können.

EP 1 739 007 Al offenbart einen wellenlosen Propeller. Der Propeller umfasst einen Stator mit einer ringförmigen Öffnung und einen Rotor, der in der Öffnung des Stators angeordnet ist. Der Rotor weist einen ringförmigen Rotorkörper auf, an dem mehrere nach innen gerichtete Propellerblätter angeordnet sind.

US 5 078 628 A offenbart einen wellenlosen Propulsionsantrieb mit einem ringförmigen Rotor und einem ringförmigen Stator. An dem Rotor ist ein Kranz mit nach außen gerichteten Propellerblättern angebracht.

Es ist deshalb Aufgabe vorliegender Erfindung ein Unterseeboot mit einem Propulsionsantrieb anzugeben, mit dem die vorgenannten Probleme zumindest teilweise vermieden werden können.

Die Lösung dieser Aufgabe gelingt durch ein Unterseeboot mit einem Propulsionsantrieb gemäß Patentanspruch 1. Vorteilhafte Ausgestaltungen des Unterseebootes sind Gegenstand der Unteransprüche 2 bis 13. Ein Verfahren zum Betrieb einer besonders vorteilhaften Ausgestaltung eines erfindungsgemäßen Propulsionsantriebes ist Gegenstand des Patentanspruchs 13. Vorteilhafte Ausgestaltungen des Verfahrens sind Gegenstand der Unteransprüche 14 bis 16.

Ein erfindungsgemäßes Unterseeboot weist einen außerhalb der Bootshülle angeordneten Propulsionsantrieb auf, der in Längsrichtung des Unterseebootes in Verlängerung dessen Heck angeordnet ist und ein Gehäuse und einen ersten elektrischen Motor umfasst. Das Gehäuse bildet einen düsenförmigen, Kanal für ein Strömen von Wasser durch den Kanal in einer Hauptströmungsrichtung von einem Einlass zu einem Auslass des Kanals aus. Der erste elektrische Motor weist einen Rotor auf, der in dem Kanal angeordnet und drehbar in dem Gehäuse gelagert ist, wobei der Rotor ringförmig mit einer Ringinnenseite und einer Ringaußenseite ausgebildet ist. Erfindungsgemäß sind an der Ringinnenseite des Rotors Flügel zum Vortrieb des Unterseebootes angeordnet. Ein elektrischer Motor mit einem derartigen ringförmigen Rotor wird in der Fachliteratur häufig als "Elektroringmotor" oder "RIM-Drive" bezeichnet.

Da der Elektromotor außerhalb der Bootshülle angeordnet ist, müssen nur Kabel für die Stromversorgung des Elektroringmotors an wahlfreier Stelle durch die Bootshülle geführt werden. Es ist jedoch keine Durchdringung der Bootshülle durch eine sich drehende Propellerwelle nötig. Somit können zum eine keine Probleme an Wellendichtungen entstehen und zum anderen führt ein Torpedotreffer im Heck des Unterseebootes mit geringerer Wahrscheinlichkeit zu einem Totalverlust des Unterseebootes. Da der Rotor von dem Gehäuse umgeben ist, kann die Geräuschabstrahlung des Rotors und der Propellerflügel für den Vortrieb des Unterseebootes klein gehalten werden. Die Geräuschentwicklung der Propellerflügel ist vor allem deshalb geringer, da bauartbedingt keine Spitzenwirbel an den Flügelaussenkanten entstehen. Durch die ringförmige Ausbildung des Rotors kann der Strömungsraum für das Wasser besonders widerstandsarm und strömungsgünstig ausgestaltet werden. Da der elektrische Motor außerhalb der Bootshülle angeordnet ist, benötigt er außerdem keinen Platz innerhalb der Bootshülle. Im Falle eines Torpedotreffers im Heck des Unterseebootes stellt der Propulsionsantrieb sogar noch eine Masse dar, die einen Teil der Explosion mit abfängt.

Gemäß der Erfindung umfasst der Propulsionsantrieb zusätzlich zumindest einen zweiten elektrischen Motor mit einem Rotor, der ebenfalls in dem Kanal angeordnet und drehbar in dem Gehäuse gelagert ist, wobei der Rotor ringförmig mit einer Ringinnenseite und einer Ringauβenseite ausgebildet ist, wobei an der Ringinnenseite des Rotors Flügel angeordnet sind, und wobei der Rotor des ersten elektrischen Motors und der Rotor des zweiten elektrischen Motors in dem Kanal in der Hauptströmungsrichtung des Wassers hintereinander angeordnet sind. Auch der zweite elektrische Motor ist somit als "RIM-Drive" bzw. "Elektroringmotor" ausgebildet. Ein derartiger Propulsionsantrieb ist in hohem Maße redundant und weist eine hohe Ausfallsicherheit auf. Außerdem kann die maximale Antriebsleistung vergrößert werden, ohne den Wirkungsgrad bei Schleichfahrt zu verringern, wodurch die Tauchzeit positiv beeinflusst wird.

Bevorzugt ist der Rotor des zweiten Motors unabhängig von dem Rotor des ersten Motors drehbar, um eine von dem Rotor des ersten Motors verursachte Abströmung des Wassers, die von der Hauptströmungsrichtung abweicht, zumindest teilweise wieder in die Hauptströmungsrichtung umzulenken. Die Rotoren der elektrischen Motoren sind hierzu bevorzugt in zueinander entgegen gesetzter Richtung drehbar in dem Gehäuse gelagert. Der Rotor des in Strömungsrichtung zuerst angeordneten ersten elektrischen Motors kann somit gezielt zur Abgabe eines Drehmomentes an das Wasser zum Vortrieb des Unterseebootes angesteuert werden. Durch den Rotor des zweiten Motors kann der verlustbehaftete Drall des Abstromes des Rotors des ersten Motors, d.h. Strömungskomponenten des Wassers, die von der Hauptströmungsrichtung abweichen, zumindest teilweise wieder in die Hauptströmungsrichtung umgelenkt und somit in Schub umgewandelt werden. Wenn die Hauptströmungsrichtung in Richtung der Drehachse des Rotors verläuft, kann es sich bei den von der Hauptströmungsrichtung abweichenden Strömungskomponenten beispielsweise um in Bezug auf die Drehachse radiale oder zirkulare Strömungskomponenten handeln. Durch den zweiten Rotor wird somit eine Strömungsumlenkung und ein zumindest teilweiser Momentenausgleich bewirkt. Eine Umlenkung der von der Hauptströmungsrichtung abweichen Strömungskomponenten des Wassers ist dadurch möglich, dass der zweite Rotor einfach stationär festgehalten wird, dass er durch das durch den Kanal strömende Wasser und ggf. zusätzlich elektrisch mit geringem Moment angetrieben wird, oder dass er kontrarotierend elektrisch angetrieben wird.

Durch die Lagerung der Rotoren in dem Gehäuse und den Momentenausgleich, der zu einer Reduzierung der Flächenbelastung bei Volllast der an den Rotoren angeordneten Flügel für den Vortrieb des Unterseebootes führt, können von dem Propulsionsantrieb an die Umgebung abgegebene Geräusche besonders gering gehalten und zudem auch die Kavitation an den Flügeln verringert werden. Dies erleichtert außerdem die hydrodynamische Entwurfsaufgabe.

Durch eine Steuerung des von dem Rotor des zweiten Motors an das Wasser abgegebenen Drehmomentes können von dem Rotor des ersten Motors in dem Abstrom des ersten Rotors erzeugte, von der Hauptströmungsrichtung abweichende Strömungskomponenten gezielt zumindest teilweise wieder in die Hauptströmungsrichtung umgelenkt werden. Die Steuerung kann beispielsweise in Abhängigkeit von den hydrodynamischen Randbedingungen und der konkreten Ausgestaltung des Propulsionsantriebes erfolgen. Durch einen optimalen Momentenausgleich zwischen den Motoren kann dann die Wasserströmung optimal ausgenutzt werden. Dies erhöht den Wirkungsgrad und somit die Einsatzdauer.

Der Propulsionsantrieb kann grundsätzlich auch mehr als zwei Motoren mit Rotoren umfassen, die in dem Kanal in der Hauptströmungsrichtung des Fluides hintereinander angeordnet sind. Bei einem derartigen Verbund von Motoren können gezielt einige Rotoren zur Drehmomentabgabe und andere zum Momentausgleich vorgesehen und beim Betrieb in entsprechender Weise betrieben werden. Der Propulsionsantrieb kann dabei je nach Leistungsanforderung und/oder fluidischen Rahmenbedingungen modular aus einer Mehrzahl standardisierter Motoreinheiten aufgebaut sein, wobei die Anzahl der Motoreinheiten geradzahlig oder auch ungeradzahlig sein kann.

Gemäß einer besonders vorteilhaften Ausgestaltung der Erfindung sind die Drehmomentabgaben der Motoren unabhängig voneinander steuerbar. Hierdurch ist es möglich, den Propulsionsantrieb an unterschiedliche fluidische Rahmenbedingungen anzupassen und gezielt eine gewünschte Betriebsart des Propulsionsantriebs einzustellen (z.B. schuboptimiert, geschwindigkeitsoptimiert, verbrauchsoptimiert, geräuschoptimiert).

Von Vorteil umfasst das Unterseeboot eine Steuerungseinrichtung zur Steuerung der Drehmomentabgaben der Motoren derart, dass die durch die Motoren abgegebenen Drehmomente in einem vorgegebenen Verhältnis zueinander stehen. Derartige Drehmomentverhältnisse können beispielsweise in Abhängigkeit von den fluidischen Rahmenbedingungen, wie z.B. der Strömungsgeschwindigkeit des Fluids oder anderer Parameter (wie z.B. der gewünschten Betriebsart), in Form von Kennlinien in der Steuerungseinrichtung gespeichert sein.

Die Steuerungseinrichtung kann das Verhältnis der Drehmomente durch Steuerung oder Regelung der Stromstärken, mit denen die Motoren beaufschlagt werden, steuern. Zur Steuerung der Drehmomentabgaben kann jeder der Motoren zur Stromzufuhr elektrisch mit jeweils einem Stromrichter verbunden sein. Mittels eines Stromrichters lässt sich auf einfache und zuverlässige Weise der einer elektrischen Maschine zugeführte Strom und somit das von der elektrischen Maschine abgegebene Drehmoment steuern.

Bevorzugt ist das Verhältnis der abgegebenen Drehmomente beim Betrieb des Propulsionsantriebs veränderbar. Der Propulsionsantrieb kann somit optimal an die im Betrieb jeweils vorherrschenden fluidischen Rahmenbedingungen oder gewünschte Betriebsart angepasst werden.

Durch die ringförmige Ausbildung des Rotors (der Rotoren) ist es besonders vorteilhaft möglich, bei dem Rotor (den Rotoren) auf eine (zentrale) Welle und dafür notwendige Halterungen zu verzichten, die besonders störend für das durch den Kanal strömende Wasser sind und den Wirkungsgrad des Propulsionsantriebs verringern. Der Motor (die Motoren) ist (sind) deshalb bevorzugt frei von einem Bauteil, das entlang der Drehachse des (ihres jeweiligen) Rotors durch diesen hindurch verläuft. Der Verzicht auf eine zentrale Welle hat auch den Vorteil, dass in den Kanal eintretende Fremdkörper sich nur schlecht verkanten können.

Durch die ringförmige Ausbildung des Rotors (der Rotoren) ist es aber auch möglich, bei dem Rotor (den Rotoren) einen zentralen rotationssymmetrischen Verdrängungskörper vorzusehen, der entlang der Drehachse des (ihres jeweiligen) Rotors durch diesen hindurch verläuft und auf den Nachstrom des Bootes optimiert ist.

Wenn das Gehäuse düsenförmig ausgebildet ist, kann ein besonders hoher Wirkungsgrad des Propulsionsantriebes erzielt werden. Durch eine derartige düsenförmige Ausgestaltung kann besonders bei Standschubbedingungen ein höherer Schub als bei einem frei drehenden Propeller erzielt werden, wodurch die Manövrierfähigkeit in engen Gewässern erhöht wird.

Dies gilt besonders, wenn das Gehäuse des Propulsionsantriebes, z.B. mittels einer geeigneten Befestigung, horizontal und/oder vertikal in Bezug auf die Bootshülle beweglich an der Bootshülle befestigt ist, da der Schubstrom dann in verschiedene Richtungen gelenkt werden kann. Hierdurch können sogar die hinteren Steuerruder an einem Unterseeboot entfallen oder zumindest stark verkleinert werden, was der Widerstandsminimierung und somit der Leistungssteigerung und Geräuschemissionssenkung dient.

Üblicherweise läuft bei einem Unterseeboot die Bootshülle an ihrem in Strömungsrichtung gesehen hinteren Ende in einem, zumeist abgerundeten, Heckteil aus, das in der Fachsprache häufig auch als "Heckkegel" bezeichnet wird. Gemäß einer besonders vorteilhaften Ausgestaltung weist das Unterseeboot genau einen vorstehend beschriebenen Propulsionsantrieb auf, wobei der Heckkegel in Strömungsrichtung vor dem Einlass des Propulsionsantriebs angeordnet ist.

Der Heckkegel ist dabei bevorzugt in einer Linie mit der Drehachse des Rotors bzw. der Rotoren angeordnet, d.h. das Ende des Heckkegels liegt genau auf der Drehachse des Rotors bzw. der Rotoren des Propulsionsantriebs. Der Heckkegel kann aber auch in einem Abstand von dieser Drehachse angeordnet sein, wobei dieser Abstand dann vorzugsweise kleiner ist als der Abstand der Ringinnenseite des Rotors bzw. der Rotoren von der Drehachse, um eine gleichmäßige Anströmung des Propulsionsantriebs zu erzielen.

Der Heckkegel kann sich aber auch in den Propulsionsantrieb hinein oder durch den Propulsionsantrieb hindurch erstrecken. Der Heckkegel ist dann bevorzugt in einer Linie mit der Drehachse des Rotors bzw. der Rotoren des Propulsionsantriebs angeordnet. Vorzugsweise ist der Heckkegel dabei achsensymmetrisch ausgebildet, wobei seine Symmetrieachse in einer Linie mit der Drehachse des Rotors bzw. der Rotoren verläuft. Die Enden der Flügel des Rotors bzw. der Rotoren des Propulsionsantriebs können dabei auch drehbar auf dem Heckkegel gelagert sein, wodurch die Stabilität und damit die Leistungsabgabe des Propulsionsantriebs vergrößert werden kann. Alternativ können die Enden der Flügel auch fest an dem Heckkegel befestigt und der Heckkegel dafür drehbar an der Bootshülle befestigt sein.

Die Größe des Propulsionsantriebs, dessen Anordnung am Heckkegel und die Form des Hecks des U-Bootes, insbesondere die Form des Heckkegels, sind dabei vorzugsweise derart aufeinander abgestimmt, dass sich eine gleichmäßige Anströmung des Propulsionsantriebs ergibt, wodurch ein guter Wirkungsgrad des Propulsionsantriebs erzielt und gleichzeitig Kavitation und unerwünschte Geräusche vermieden werden können. Eine derartige Systemoptimierung ist für einen Fachmann der Hydrodynamik ohne größere Schwierigkeiten möglich.

Grundsätzlich kann ein Unterseeboot natürlich auch genau zwei vorstehend geschilderte Propulsionsantriebe aufweisen, die beispielsweise nebeneinander in Längsrichtung des Unterseebootes in Verlängerung des Hecks außerhalb der Bootshülle angeordnet sind (z.B. je einer auf Steuerbord- und Backbordseite).

Ein besonders vorteilhaftes Verfahren zum Betrieb eines vorstehend beschriebenen Propulsionsantriebs mit zwei elektrischen Motoren zeichnet sich dadurch aus, dass eine von dem Rotor des ersten Motors verursachte Abströmung des Wassers, die von der Hauptströmungsrichtung abweicht, von dem Rotor des zweiten Motors zumindest teilweise wieder in die Hauptströmungsrichtung umgelenkt wird.

Hierbei bieten sich folgende besonders vorteilhaften Betriebsmodi an:
a) Der Rotor des ersten Motors wird elektrisch angetrieben und der Rotor des zweiten Motors wird stationär festgehalten. Diese Betriebsart bietet sich vorzugsweise für eine Schleichfahrt des Unterseebootes an.
b) Der Rotor des ersten Motors wird elektrisch angetrieben und der Rotor des zweiten Motors wird ganz oder zumindest im Wesentlichen durch das durch den Kanal strömende Wasser angetrieben. Der Rotor des zweiten Motors kann dann die Funktion eines Grimschen Leitrades übernehmen, das von der Hauptströmungsrichtung abweichende und somit verlustbehaftete Strömungskomponenten des Abstromes des ersten Rotors zumindest teilweise wieder in die Hauptströmungsrichtung umlenkt. Diese Betriebsart bietet sich vorzugsweise für eine Marschfahrt des Unterseebootes an. Falls notwendig wird diese Bewegung noch durch ein geringes Moment, welches durch den zweiten Motor aufgebracht wird, unterstützt, z.B. wenn der zweite Rotor mit seinen Flügeln nicht wie ein Grimsches Leitrad ausgelegt ist.
c) Die Rotoren beider Motoren werden elektrisch angetrieben, wobei die beiden Rotoren kontrarotieren. Diese Betriebsart ist besonders vorteilhaft für eine Fahrt mit hoher Geschwindigkeit und/oder bei großer Wassertiefe, da hier eine deutliche Wirkungsgradsteigerung(ca. 3%) zu erwarten ist.

Die Erfindung sowie weitere vorteilhafte Ausgestaltungen der Erfindung gemäß Merkmalen der Unteransprüche werden im folgenden anhand von Ausführungsbeispielen in den Figuren näher erläutert; darin zeigen:
- FIG 1: ein Unterseeboot mit einem Propulsionsantrieb mit einem einzigen Elektroringmotor,
- FIG 2: einen Teillängsschnitt durch den Propulsionsantrieb von FIG 1,
- FIG 3: ein Unterseeboot mit einem Propulsionsantrieb mit zwei Elektroringmotoren,
- FIG 4: einen Teillängsschnitt durch den Propulsionsantrieb von FIG 3,
- FIG 5: eine Prinzipdarstellung des Propulsionsantriebs von FIG 3 und FIG 4 und der Komponenten zu Steuerung ihrer Drehmomentabgabe,
- FIG 6: einen Propulsionsantrieb mit einem Rotor mit einer zusätzlichen Lagerung auf dem Heckkegel,
- FIG 7: einen Propulsionsantrieb mit zwei Rotoren mit einer zusätzlichen Lagerung auf dem Heckkegel.

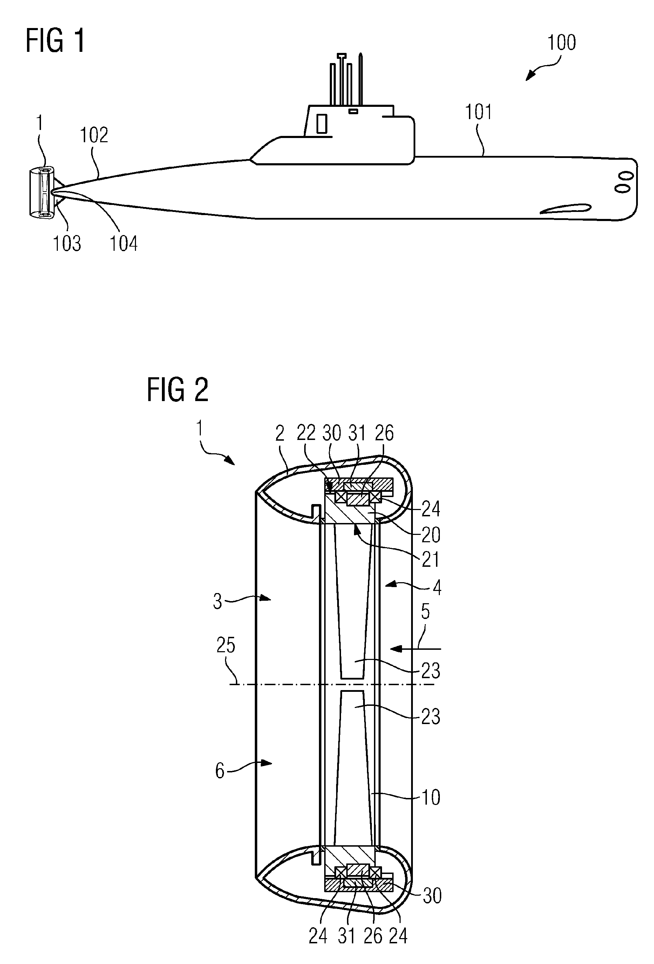

FIG 1 zeigt in einer prinzipiellen Darstellung ein bemanntes militärisches Unterseeboot 100 mit einer Bootshülle 101 und einem am Heck 102 des Unterseebootes 100 angeordneten Propulsionsantrieb 1. Der Propulsionsantrieb 1 stellt dabei den Hauptpropulsionsantrieb des Unterseebootes dar. Der Propulsionsantrieb 1 ist in Längsrichtung des Unterseebootes 100 in Verlängerung des Hecks außerhalb der Bootshülle 101 angeordnet. Die Befestigung des Propulsionsantriebs 1 an der Bootshülle 101 erfolgt mittels Halterungen 103. Grundsätzlich kann ein Unterseeboot als Hauptpropulsionsantrieb auch zwei oder mehr derartige Propulsionsantriebe 1 aufweisen, die nebeneinander in Längsrichtung des Unterseebootes 100 in Verlängerung des Hecks 102 außerhalb der Bootshülle 101 angeordnet sind (z.B. je einer auf Steuerbord- und Backbordseite)

Wie im Detail in FIG 2 dargestellt, weist der Hauptpropulsionsantrieb 1 ein düsenförmig ausgebildetes Gehäuse 2 auf, das einen rohrförmigen Kanal 3 für ein Strömen von Wasser durch den Kanal 3 in einer Hauptströmungsrichtung 5 von einem Einlass 4 zu einem Auslass 6 des Kanals 3 ausbildet.

Der Propulsionsantrieb 1 umfasst einen elektrischer Motor 10 mit einem Rotor 20, der in dem Kanal 3 angeordnet und um eine Drehachse 25 drehbar in dem Gehäuse 2 gelagert ist, wobei der Rotor 20 als Hohlzylinder und somit ringförmig mit einer Ringinnenseite 21 und einer Ringaußenseite 22 ausgebildet ist. An der Ringinnenseite 21 des Rotors 20 sind in Umfangsrichtung gleichmäßig verteilt Flügel 23 zum Vortrieb des Unterseebootes 100 angeordnet. Unter der Ringaußenseite 22 wird hierbei die Seite des Rotors 20 verstanden, die durch die radial äußere Begrenzungsfläche des Rotors 20 definiert ist und unter der Ringinnenseite 21 wird die Seite des Rotors 20 verstanden, die durch die radial innere Begrenzungsfläche des Rotors 20 definiert ist. Die Hauptströmungsrichtung 5 verläuft hierbei in Richtung der Drehachse 25 des Rotors 20.

Der Rotor 20 ist an seiner Ringaußenseite 22 mittels Lager 24 um die Drehachse 25 drehbar in dem Gehäuse 2 gelagert. Die Lagerung kann jedoch grundsätzlich auch mittels Lager auf der Ringinnenseite 21 oder an einer oder beiden Stirnseiten des ringförmigen Rotors 20 erfolgen.

Die nach innen in Richtung zur Drehachse 25 gerichtet an der Ringinnenseite 21 des Rotors 20 angeordneten Flügel 23 rotieren mit dem Rotor 20 mit und sind vorzugsweise in standardisierten Befestigungsvorrichtungen lösbar an dem Rotor 20 befestigt, um sie auswechseln zu können. Die Flügel 23 können hierbei beispielsweise eine axiale, halbaxiale oder radiale Form aufweisen. Der Rotor 20 bildet mit den daran befestigten Flügeln 23 somit einen Impeller aus. Auf der Ringaußenseite 22 des Rotors 20 ist ein Erregersystem 26 angeordnet. Hierbei kann es sich um eine Anordnung von Permanentmagneten oder um ein Wicklungssystem handeln, das in Umfangsrichtung des Rotors 20 verteilt auf dessen Ringaußenseite 22 angeordnet ist.

Der Motor 10 umfasst weiterhin einen Stator 30 mit einem statorseitigen Erregersystem 31, wobei der Stator 30 ringförmig derart um den Rotor 20 angeordnet ist, dass das statorseitige Erregersystem 31 und das rotorseitige Erregersystem 26 elektromagnetisch zusammenwirken, so dass der Stator 30 mit dem Rotor 20 den elektrischen Motor 10 bildet. Ein derartiger elektrischer Motor 10 mit einem ringförmigen Rotor 20 wird in der Fachliteratur häufig als "RIM-Drive" oder als "Elektroringmotor" bezeichnet.

Die Kabel für die Stromzuführung zu dem Motor 10 sowie Signalleitungen für die Steuerung und Regelung sowie Überwachung des Motors 10 können beispielsweise in den Halterungen 103 verlaufen.

Der Propulsionsantrieb 1 ist besonders widerstandsarm für das durch den Kanal 3 strömende Wasser ausgeführt. Hierzu ist der Motor 10 frei von einem Bauteil, das entlang der Drehachse 25 seines Rotors 20 durch diesen hindurch verläuft. Außerdem ist der Stator 30 in das Gehäuse 2 integriert. Weiterhin ist der ringförmige Rotor 20 derart ausgebildet, dass der Durchmesser der Ringinnenseite 21 dem Durchmesser des Kanals 3 unmittelbar vor dem Rotor 20 entspricht. Der ringförmige Rotor 20 ist hierzu in dem Gehäuse 2 versenkt angeordnet bzw. bildet mit seiner Ringinnenseite 21 die äußere Begrenzungsfläche des Kanals 3 im Bereich des Rotors 20, wobei diese äußere Begrenzungsfläche mit der angrenzenden, von dem Gehäuse 2 gebildeten äußeren Begrenzungsfläche fluchtet. Der ringförmige Rotor 20 selbst stellt somit keinen über die Wandreibung hinausgehenden Strömungswiderstand für das Wasser dar.

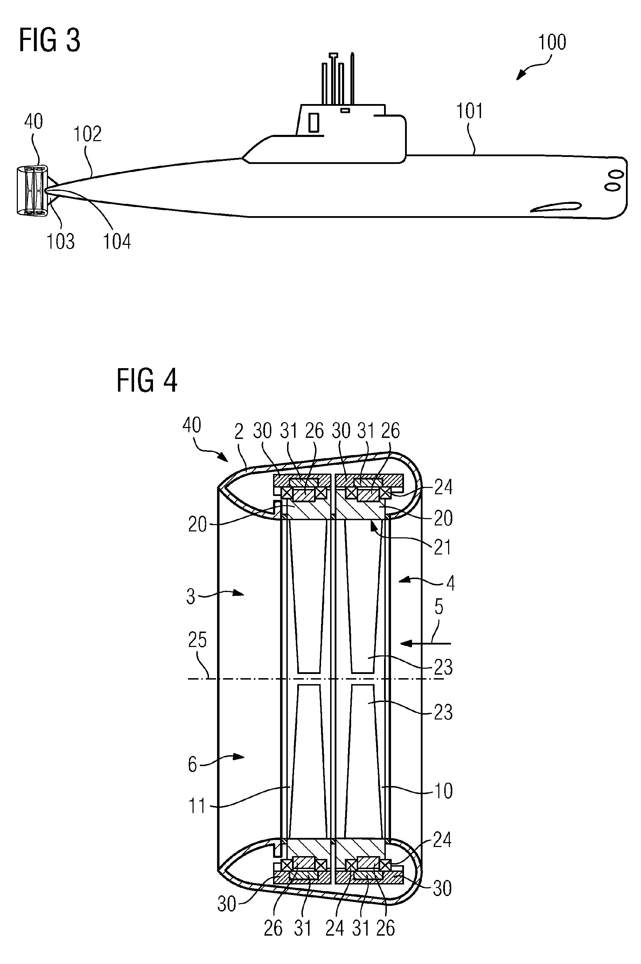

Ein in FIG 3 dargestelltes Unterseeboot 100 unterscheidet sich von dem in FIG 1 dargestellten Unterseeboot dadurch, dass es einen Propulsionsantrieb 40 aufweist, der statt nur eines einzigen Motors 10 nun zwei Motoren 10, 11 umfasst.

Wie hierzu im Detail in FIG 4 dargestellt, umfasst jeder der Motoren 10, 11 jeweils einen Rotor 20, der als Hohlzylinder und somit ringförmig mit einer Ringinnenseite 21 und einer Ringaußenseite 22 ausgebildet ist und bei dem an der Ringinnenseite 21 Flügel 23 angeordnet sind.

Die Rotoren 20 der zwei Motoren 10, 11 sind in dem Kanal 3 in Strömungsrichtung des Fluids koaxial hintereinander angeordnet und mit ihrer jeweiligen Ringaußenseite 22 mittels Lager 24 voneinander unabhängig in gleicher und zueinander entgegen gesetzter Richtung um eine gemeinsame Drehachse 25 drehbar in dem Gehäuse 2 gelagert. Die Hauptströmungsrichtung 5 verläuft hierbei in Richtung der Drehachsen 25 der Rotoren 20. Die Motoren 10, 11 sind frei von einem Bauteil, das entlang der Drehachse 25 ihrer jeweiligen Rotoren 20 durch diese hindurch verläuft.

Bei beiden Motoren 10, 11 ist auf der Ringaußenseite 22 der Rotoren 20 jeweils ein Erregersystem 26 angeordnet, bei dem es sich beispielsweise um eine Anordnung von Permanentmagneten oder um ein Wicklungssystem handeln, das in Umfangsrichtung des Rotors 20 verteilt auf der Ringaußenseite 22 angeordnet ist.

Beide Motoren 10, 11 umfassen jeweils einen Stator 30 mit einem statorseitigen Erregersystem 31, wobei der Stator 30 ringförmig derart um den Rotor 20 angeordnet ist, dass das statorseitige Erregersystem 31 und das rotorseitige Erregersystem 26 elektromagnetisch zusammenwirken, so dass der Stator 30 mit dem Rotor 20 den elektrischen Motor 10 bzw. 11 bildet.

Der Rotor 20 des zweiten Motors 11 ist unabhängig von dem Rotor 20 des ersten Motors 10 drehbar, um eine von dem Rotor 20 des ersten Motors 10 verursachte Abströmung des Wassers, die von der Hauptströmungsrichtung 5 abweicht, zumindest teilweise wieder in die Hauptströmungsrichtung 5 umzulenken.

Der Rotor 20 des in Strömungsrichtung zuerst angeordneten ersten elektrischen Motors 10 kann somit gezielt zur Abgabe eines Drehmomentes an das Wasser zum Vortrieb des Unterseebootes 100 angesteuert werden. Durch den Rotor 20 des zweiten Motors 11 kann der verlustbehaftete Drall des Abstromes des Rotors 20 des ersten Motors 10, d.h. Strömungskomponenten des Wassers, die von der Hauptströmungsrichtung 5 abweichen, zumindest teilweise wieder in die Hauptströmungsrichtung 5 umgelenkt und somit in Schub umgewandelt werden.

Durch den Rotor 20 des zweiten Motors 11 wird somit eine Strömungsumlenkung und ein zumindest teilweiser Momentenausgleich bewirkt. Eine Umlenkung der von der Hauptströmungsrichtung 5 abweichenden Strömungskomponenten des Wassers ist beispielsweise dadurch möglich, dass der Rotor 20 des zweiten Motors 11 stationär festgehalten bzw. fest arretiert wird oder dass er durch das durch den Kanal 3 strömende Wasser angetrieben wird oder dass er in entgegen gesetzter Richtung wie der Rotor 20 des ersten Motors 10 elektrisch angetrieben wird, d.h. dass die beiden Rotoren 20 kontrarotieren.

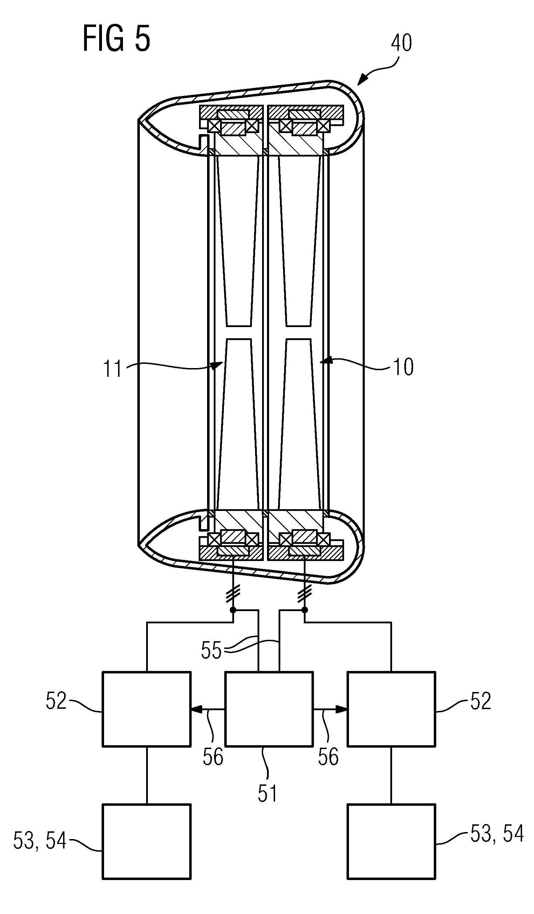

Wie FIG 5 für den Fall des Propulsionsantriebs 40 von FIG 3 und FIG 4 zeigt, dient im Fall, dass dieser zwei Motoren 10, 11 umfasst, eine Steuerungseinrichtung 51 zur Steuerung der Drehmomentabgaben der Motoren 10, 11 derart, dass die durch die Motoren 10, 11 abgegebenen Drehmomente in einem, insbesondere durch die Wasserdynamik, vorgegebenen Verhältnis zueinander stehen.

Zur Steuerung der Drehmomentabgaben ist jeder der Motoren 10, 11 elektrisch mit jeweils einem Stromrichter 52 verbunden. Bei Motorbetrieb wird jeder der Motoren 10, 11 über den jeweiligen Stromrichter 52 von einer Energiequelle 53, z.B. einem Stromgenerator oder einer Brennstoffzellenanlage, oder einem Energiespeicher 54, z.B. einer Batterie, mit elektrischem Strom gespeist.

Die Steuerungseinrichtung 51 steuert die Drehmomente der Motoren 10, 11 und somit auch das Verhältnis der Drehmomente der beiden Motoren 10, 11 durch Steuerung der Stromstärken, mit denen die Motoren 10, 11 beaufschlagt werden. Die Steuerungseinrichtung 51 erfasst diese Stromstärken über Signalleitungen 55 und steuert die Stromrichter 52 über Steuerleitungen 56.

Das Verhältnis der durch die Motoren 10, 11 abgegebenen Drehmomente ist somit beim Betrieb des Propulsionsantriebs veränderbar. Hierdurch kann das Verhältnis an die fluidischen Rahmenbedingungen und andere Betriebsparameter, wie z.B. eine gewünschte Betriebsart des Propulsionsantriebs 40 (z.B. schuboptimiert, geschwindigkeitsoptimiert, verbrauchsoptimiert, geräuschoptimiert), angepasst und ein gewünschter Betriebspunkt des Propulsionsantriebs 40 eingestellt werden. Zur Bestimmung des Drehmomentverhältnisses sind in der Steuerungseinrichtung 51 Kennlinien oder Datensätze hinterlegt, die die Abhängigkeit des Drehmomentverhältnisses von den fluidischen Rahmenbedingungen und den Betriebsparametern (z.B. gewünschte Betriebsart) beschreiben.

Eine weitere Anpassung der Maschine an geänderte fluidische Rahmenbedingungen ist dadurch möglich, dass die Steigung der Flügel 23 veränderbar ist.

Das Gehäuse 2 des Propulsionsantriebes 1, 40 kann auch, z.B. mittels einer geeigneten, ggf. kardanischen, Befestigung, horizontal und/oder vertikal in Bezug auf die Bootshülle 101 beweglich an der Bootshülle 101 befestigt sein. Der Schubstrom des Propulsionsantriebes 1, 40 kann dann in verschiedene Richtungen gelenkt werden, wodurch die Manövrierfähigkeit des Unterseebootes verbessert werden kann.

Der Propulsionsantrieb 40 mit zwei elektrischen Motoren 10, 11 von FIG 3 - 5 wird bevorzugt derart betrieben, dass eine von dem Rotor 20 des ersten Motors 10 verursachte Abströmung des Wassers, die von der Hauptströmungsrichtung 5 abweicht, von dem Rotor 20 des zweiten Motors 11 zumindest teilweise wieder in die Hauptströmungsrichtung 5 umgelenkt wird. Hierzu stehen die folgenden drei Betriebsmodi zur Verfügung:

Für eine Schleichfahrt des Unterseebootes wird nur der Rotor 20 des ersten Motors 10 elektrisch angetrieben. Der Rotor 20 des zweiten Motors 11 wird dagegen, z.B. mittels einer nicht näher dargestellten Bremse, stationär festgehalten bzw. fest arretiert.

Für eine Marschfahrt des Unterseebootes wird ebenfalls nur der Rotor 20 des ersten Motors 10 elektrisch angetrieben. Der Rotor 20 des zweiten Motors 11 ist dagegen frei drehbar und wird ganz oder zumindest im Wesentlichen durch das durch den Kanal 3 strömende Wasser angetrieben. Der Rotor 20 des zweiten Motors 11 kann bei entsprechender Auslegung der Flügel 23 dann die Funktion eines Grimschen Leitrades übernehmen, das von der Hauptströmungsrichtung 5 abweichende und somit verlustbehaftete Strömungskomponenten des Abstromes des Rotors 20 des ersten Motors 10 zumindest teilweise wieder in die Hauptströmungsrichtung 5 umlenkt. Alternativ kann der Rotor 20 des zweiten Motors 11 auch abhängig von der hydrodynamischen Auslegung des zweiten Propellers wie oben beschrieben festgehalten werden oder durch den Motor 11 kontrarotierend angetrieben werden.

Bei einer Fahrt mit hoher Geschwindigkeit und/oder bei großer Wassertiefe werden die Rotoren 20 der beiden Motoren 10, 11 elektrisch in entgegen gesetzter Richtung angetrieben, so dass sie kontrarotieren und durch die Kontrarotation einen gewünschten Momentenausgleich bewirken.

Durch ein derartiges Fahrtregime wird die Stromabnahme von der Batterie oder der Brennstoffzelle optimal eingestellt und somit der Energieverbrauch minimiert, wodurch die Fahrt- oder Tauchzeit des Unterseebootes verlängert werden kann. Gleichzeitig wird die hydrodynamische Entwurfsaufgabe mit weniger Kompromissen belastet, da die Flächenbelastung der Propeller für Höchstfahrt durch den Einsatz von 2 Propellern verringert wird. Gleichzeitig wird der Wirkungsgrad der Propulsion verbessert.

Bei dem in FIG 1 und FIG 3 gezeigten Unterseeboot 100 läuft die Bootshülle 101 an ihrem in Strömungsrichtung gesehen hinteren Ende in einem abgerundeten Heckteil 104 aus, das in der Fachsprache häufig auch als "Heckkegel" bezeichnet wird. Das Unterseeboot 100 weist genau einen Propulsionsantrieb 1 bzw. 40 auf, der derart am Heck 102 des Unterseebootes 100 angeordnet ist, dass sich dieser Heckkegel 104 bis in den Einlass 4 des Propulsionsantriebs 1 bzw. 40 hinein erstreckt.

Die Größe des Propulsionsantriebs, dessen Anordnung am Heckkegel 104 und die Form des Hecks 102 des Unterseebootes 100, insbesondere die Form des Heckkegels 104, sind dabei derart aufeinander abgestimmt, dass sich eine gleichmäßige Anströmung des Propulsionsantriebs ergibt, wodurch ein guter Wirkungsgrad des Propulsionsantriebs erzielt und gleichzeitig Kavitation und unerwünschte Geräusche vermieden werden können.

Der Heckkegel 104 ist dabei in einer Linie zu der Drehachse 25 des Rotors 20 bzw. der Rotoren 20 des Propulsionsantriebs 1 bzw. 40 angeordnet. Der Heckkegel 104 ist hierbei achsensymmetrisch ausgebildet, wobei seine Symmetrieachse in einer Linie mit der Drehachse 25 des Rotors 20 bzw. der Rotoren 20 verläuft.

Der Heckkegel 104 kann sich aber auch durch den Propulsionsantrieb 1 bzw. 40 hindurch erstrecken.

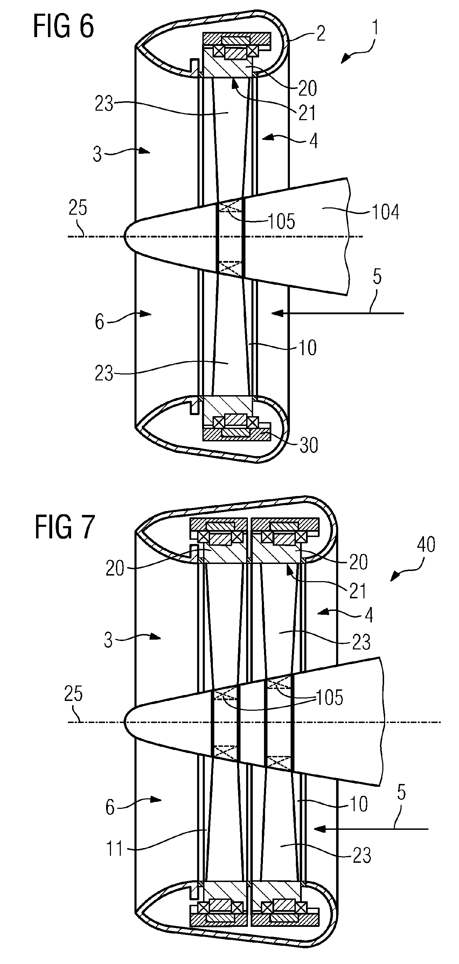

FIG 6 zeigt hierzu den Propulsionsantrieb 1 von FIG 2, wobei der Rotor 20 aber nicht nur mittels der Lager 24 drehbar in dem Gehäuse 2, sondern zusätzlich auch noch über die Enden der Flügel 23 mittels Lager 105 drehbar auf dem Heckkegel 104 gelagert ist. Hierdurch kann die Stabilität und damit die Leistungsabgabe des Propulsionsantriebs 1 vergrößert werden kann.

FIG 7 zeigt eine entsprechende Ausführung für den Fall des Propulsionsantriebs 40 von FIG 4.

## Patentansprüche

1. Unterseeboot (100) mit einer Bootshülle (101) und einem Propulsionsantrieb (1) für das Unterseeboot,
**dadurch gekennzeichnet, dass** der Propulsionsantrieb (1) in Längsrichtung des Unterseebootes (100) in Verlängerung dessen Heck (102) außerhalb der Bootshülle (101) angeordnet ist und ein Gehäuse (2) und einen ersten elektrischen Motor (10) umfasst, wobei das Gehäuse (2) einen Kanal (3) für ein Strömen von Wasser durch den Kanal (3) in einer Hauptströmungsrichtung (5) von einem Einlass (4) zu einem Auslass (6) des Kanals (3) ausbildet, und wobei der erste elektrische Motor (10) einen Rotor (20) aufweist, der in dem Kanal (3) angeordnet und um eine Drehachse (25) drehbar in dem Gehäuse (2) gelagert ist, wobei der Rotor (20) ringförmig mit einer Ringinnenseite (21) und einer Ringaußenseite (22) ausgebildet ist, wobei an der Ringinnenseite (21) des Rotors (20) Flügel zum Vortrieb des Unterseebootes (23) angeordnet sind,
und dass der Propulsionsantrieb (1) zumindest einen zweiten elektrischen Motor (11) umfasst, wobei der zweite elektrische Motor (11) einen Rotor (20) aufweist, der in dem Kanal (3) angeordnet und drehbar in dem Gehäuse (2) gelagert ist, wobei der Rotor (20) ringförmig mit einer Ringinnenseite (21) und einer Ringaußenseite (22) ausgebildet ist, wobei an der Ringinnenseite (21) des Rotors (20) Flügel (23) angeordnet sind, und wobei der Rotor (20) des ersten elektrischen Motors (10) und der Rotor (20) des zweiten elektrischen Motors (11) in dem Kanal (3) in der Hauptströmungsrichtung (5) des Wassers hintereinander angeordnet sind.

2. Unterseeboot (100) nach Anspruch 1,
**dadurch gekennzeichnet, dass** der Rotor (20) des ersten elektrischen Motors (10) unabhängig von dem Rotor (20) des zweiten elektrischen Motors (11) drehbar ist, um eine von dem Rotor (20) des ersten elektrischen Motors (10) verursachte Abströmung des Wassers, die von der Hauptströmungsrichtung (5) abweicht, zumindest teilweise wieder in die Hauptströmungsrichtung (5) umzulenken.

3. Unterseeboot (100) nach Anspruch 2,
**dadurch gekennzeichnet, dass** die Rotoren (20) der elektrischen Motoren (10,11) in zueinander entgegen gesetzter Richtung drehbar in dem Gehäuse (2) gelagert sind.

4. Unterseeboot (100) nach einem der vorhergehenden Ansprüche,
**dadurch gekennzeichnet, dass** die Drehmomentabgaben der elektrischen Motoren (10, 11) unabhängig voneinander steuerbar sind.

5. Unterseeboot (100) nach einem der vorhergehenden Ansprüche,
**gekennzeichnet durch** eine Steuerungseinrichtung (51) zur Steuerung der Drehmomentabgaben der elektrischen Motoren (10, 11) derart, dass die **durch** die elektrischen Motoren (10, 11) abgegebenen Drehmomente in einem vorgegebenen Verhältnis zueinander stehen, wobei die Steuerungseinrichtung (51) das Verhältnis der Drehmomente **durch** Steuerung oder Regelung der Stromstärken, mit denen die elektrischen Motoren (10, 11) beaufschlagt werden, steuert.

6. Unterseeboot (100) nach Anspruch 5,
**dadurch gekennzeichnet, dass** das Verhältnis der abgegebenen Drehmomente beim Betrieb der elektrischen Motoren (10,11) veränderbar ist.

7. Unterseeboot (100) nach einem der vorhergehenden Ansprüche,
**dadurch gekennzeichnet, dass** das Gehäuse (2) düsenförmig ausgebildet ist.

8. Unterseeboot (100) nach einem der vorhergehenden Ansprüche,
**dadurch gekennzeichnet, dass** das Gehäuse (2) in wenigstens einer Richtung gegenüber der Bootshülle (101) beweglich an der Bootshülle (101) befestigt ist.

9. Unterseeboot (100) mit genau einem Propulsionsantrieb (1, 40) nach einem der vorgehenden Ansprüche,
**dadurch gekennzeichnet, dass** es eine Bootshülle (102) aufweist, die an ihrem in Strömungsrichtung gesehen hinteren Ende in einem Heckkegel (104) ausläuft, wobei der Heckkegel (104) in Strömungsrichtung vor dem Einlass (4) des Propulsionsantriebs (1) angeordnet ist.

10. Unterseeboot (100) mit genau einem Propulsionsantrieb (1, 40) nach einem der Ansprüche 1 bis 8,
**dadurch gekennzeichnet, dass** es eine Bootshülle (102) aufweist, die an ihrem in Strömungsrichtung gesehen hinteren Ende in einem Heckkegel (104) ausläuft, wobei sich der Heckkegel (104) in den Propulsionsantrieb (1) hinein oder durch den Propulsionsantrieb (1) hindurch erstreckt.

11. Unterseeboot (100) nach Anspruch 10,
**dadurch gekennzeichnet, dass** die Enden der Flügel (23) des Rotors (20) bzw. der Rotoren (20) des Propulsionsantriebs (1 bzw. 40) drehbar auf dem Heckkegel (104) gelagert sind.

12. Unterseeboot (100) nach einem der Ansprüche 9 bis 11, **dadurch gekennzeichnet, dass** der Heckkegel (104) in einer Linie mit der Drehachse (25) des Rotors (20) bzw. der Rotoren (20) angeordnet ist.

13. Verfahren zum Betrieb eines Unterseebootes (100) nach einem der vorhergehenden Ansprüche,
**dadurch gekennzeichnet, dass** eine von dem Rotor (20) des ersten Motors (10) verursachte strömung des Wassers, die von der Hauptströmungsrichtung (5) abweicht, von dem Rotor (20) des zweiten Motors (11) zumindest teilweise wieder in die Hauptströmungsrichtung (5) umgelenkt wird.

14. Verfahren zum Betrieb eines Unterseebootes (100) nach Anspruch 13,
**dadurch gekennzeichnet, dass**, vorzugsweise für eine Schleichfahrt des Unterseebootes, der Rotor (20) des ersten Motors (10) elektrisch angetrieben und der Rotor (20) des zweiten Motors stationär festgehalten wird.

15. Verfahren zum Betrieb eines Unterseebootes (100) nach Anspruch 13 oder 14,
**dadurch gekennzeichnet, dass**, vorzugsweise für eine Marschfahrt des Unterseebootes, der Rotor (20) des ersten Motors (10) elektrisch angetrieben wird und der Rotor (20) des zweiten Motors (11) ganz oder zumindest im Wesentlichen durch das durch den Kanal (3) strömende Wasser angetrieben wird.

16. Verfahren zum Betrieb eines Unterseebootes (100) nach einem der Ansprüche 13 bis 15,
**dadurch gekennzeichnet, dass**, vorzugsweise für eine Fahrt mit hoher Geschwindigkeit und/oder bei großer Wassertiefe, die Rotoren (20) beider Motoren (10, 11) elektrisch angetrieben werden, wobei die beiden Rotoren (20) kontrarotieren.

## Claims

1. Submarine (100) with a boat hull (101) and a propulsion drive (1) for the submarine,
**characterised in that** the propulsion drive (1) is arranged in the longitudinal direction of the submarine (100) as an extension of its stern (102) outside the boat hull (101) and comprises a housing (2) and a first electric motor (10), wherein the housing (2) forms a channel (3) for a flow of water through the channel (3) in a main direction of flow (5) from an inlet (4) to an outlet (6) of the channel (3), and wherein the first electric motor (10) has a rotor (20) which is arranged in the channel (3) and is supported rotatably around an axis of rotation (25) in the housing (2), wherein the rotor (20) is embodied in the shape of a ring with a ring inner side (21) and a ring outer side (22), wherein blades for propelling the submarine (23) are arranged on the ring inner side (21) of the rotor (20),
and that the propulsion drive (1) comprises at least one second electric motor (11), wherein the second electric motor (11) has a rotor (20) which is arranged in the channel (3) and is supported rotatably in the housing (2), wherein the rotor (20) is embodied in the form of a ring with a ring inner side (21) and a ring outer side (22), wherein blades (23) are arranged on the ring inner side (21) of the rotor (20), and wherein the rotor (20) of the first electric motor (10) and the rotor (20) of the second electric motor (11) are arranged in the channel (3) one behind the other in the main direction of flow (5) of the water.

2. Submarine (100) according to claim 1,
**characterised in that** the rotor (20) of the first electric motor (10) is able to be rotated independently of the rotor (20) of the second electric motor (11), in order to divert an outflow of the water caused by the rotor (20) of the first electric motor (10) which deviates from the main direction of flow (5) at least partly back into the main direction of flow (5).

3. Submarine (100) according to claim 2,
**characterised in that** the rotors (20) of the electric motors (10, 11) are supported to enable them to rotate in opposite directions to each other in the housing (2).

4. Submarine (100) according to one the preceding claims,
**characterised in that** the torque outputs of the electric motors (10, 11) are able to be controlled independently of each other.

5. Submarine (100) according to one the preceding claims,
**characterised by** a control device (51) for controlling the torque outputs of the electric motors (10, 11) such that the torques output by the electric motors (10, 11) are in a predetermined relationship to each other, wherein the control device (51) controls the ratio of the torques by controlling or regulating the current levels applied to the electric motors (10, 11).

6. Submarine (100) according to claim 5,
**characterised in that** the ratio of the torques output during the operation of the electric motors (10, 11) is able to be changed.

7. Submarine (100) according to one of the preceding claims,
**characterised in that** the housing (2) is embodied in the shape of a nozzle.

8. Submarine (100) according to one of the preceding claims,
**characterised in that** the housing (2) is attached movably on the boat hull (101) in at least one direction in relation to the boat hull (101).

9. Submarine (100) with precisely one propulsion drive (1, 40) according to one of the preceding claims,
**characterised in that** it features a boat hull (102) which at its rear end, seen in the direction of flow, finishes in a stern cone (104), wherein the stern cone (104) is arranged in the direction of flow in front of the inlet (4) of the propulsion drive (1).

10. Submarine (100) with precisely one propulsion drive (1, 40) according to one of claims 1 to 8,
**characterised in that** it features a boat hull (102) which at its rear end, seen in the direction of flow, finishes in a stern cone (104), wherein the stern cone (104) extends into the propulsion drive (1) or through the propulsion drive (1).

11. Submarine (100) according to claim 10,
**characterised in that** the ends of the blades (23) of the rotor (20) or of the rotors (20) of the propulsion drive (1 or 40) are supported rotatably on the stern cone (104).

12. Submarine (100) according to one of claims 9 to 11,
**characterised in that** the stern cone (104) is arranged in line with the axis of rotation (25) of the rotor (20) or the rotors (20).

13. Method for operating a submarine (100) according to one of the preceding claims,
**characterised in that** an outflow of the water caused by the rotor (20) of the first motor (10) which deviates from the main direction of flow (5), is at least partly diverted by the rotor (20) of the second motor (11) back into the main direction of flow (5).

14. Method for operating a submarine (100) according to claim 13,
**characterised in that** preferably, for silent running of the submarine, the rotor (20) of the first motor (10) is driven electrically and the rotor (20) of the second motor is held stationary.

15. Method for operating a submarine (100) according to claim 13 or 14,
**characterised in that** preferably, when the submarine is cruising, the rotor (20) of the first motor (10) is driven electrically and the rotor (20) of the second motor (11) is driven entirely at least or essentially by the water flowing through the channel (3).

16. Method for operating a submarine (100) according to one of claims 13 to 15,
**characterised in that**, preferably for travelling at high speed and/or at great depth, the rotors (20) of the two motors (10, 11) are driven electrically, wherein the two rotors (20) contrarotate.

## Revendications

1. Sous-marin ( 100 ) ayant une coque ( 101 ) et une propulsion ( 1 ) du sous-marin,
**caractérisé en ce que** la propulsion ( 1 ) est disposée dans la direction longitudinale du sous-marin ( 100 ), dans le prolongement de sa poupe ( 102 ), à l'extérieur de la coque ( 101 ) et comprend une carcasse ( 2 ) et un premier moteur ( 10 ) électrique, la carcasse ( 2 ) formant un canal ( 3 ) pour un courant d'eau passant dans le canal ( 3 ) dans un sens ( 5 ) d'écoulement principal d'une entrée ( 4 ) à une sortie ( 6 ) du canal ( 3 ), et le premier moteur ( 10 ) électrique ayant un rotor ( 20 ), qui est disposé dans le canal ( 3 ) et qui est monté dans la carcasse ( 2 ) tournant autour d'un axe ( 25 ) de rotation, le rotor ( 20 ) étant constitué annulairement en ayant un côté ( 21 ) intérieur annulaire et un côté ( 22 ) extérieur annulaire, des ailettes de propulsion du sous-marin ( 23 ) étant montées sur le côté ( 21 ) intérieur annulaire du rotor ( 20 ),
et **en ce que** la propulsion ( 1 ) comprend au moins un deuxième moteur ( 11 ) électrique, le deuxième moteur ( 11 ) électrique ayant un rotor ( 20 ) qui est disposé dans le canal ( 3 ) et qui est monté tournant dans la carcasse ( 2 ), le rotor ( 20 ) étant formé annulairement en ayant un côté ( 21 ) intérieur annulaire et un côté ( 22 ) extérieur annulaire, des ailettes ( 23 ) étant montées sur le côté ( 21 ) intérieur annulaire du rotor ( 20 ) et le rotor ( 20 ) du premier moteur ( 10 ) électrique et le rotor ( 20 ) du deuxième moteur ( 11 ) électrique étant disposés dans le canal ( 3 ), l'un derrière l'autre dans le sens ( 5 ) d'écoulement principal de l'eau.

2. Sous-marin ( 100 ) suivant la revendication 1,
**caractérisé en ce que** le rotor ( 20 ) du premier moteur ( 10 ) électrique peut tourner indépendamment du rotor ( 20 ) du deuxième moteur ( 11 ) électrique, pour remettre, au moins en partie, dans le sens ( 5 ) d'écoulement principal, une sortie de l'eau qui est provoquée par le rotor ( 20 ) du premier moteur ( 10 ) électrique et qui s'écarte du sens ( 5 ) d'écoulement principal.

3. Sous-marin ( 100 ) suivant la revendication 2,
**caractérisé en ce que** les rotors ( 20 ) des moteurs ( 10, 11 ) électriques sont montés dans la carcasse ( 2 ), tournant dans des sens contraires l'un à l'autre.

4. Sous-marin ( 100 ) suivant l'une des revendications précédentes,
**caractérisé en ce que** les couples de rotation, cédés par les moteurs ( 10, 11 ) électriques, peuvent être commandés indépendamment l'un de l'autre.

5. Sous-marin ( 100 ) suivant l'une des revendications précédentes,
**caractérisé par** un dispositif ( 51 ) de commande des couples de rotation cédés par les moteurs ( 10, 11 ) électriques, de manière à ce que les couples de rotation, cédés par les moteurs ( 10, 11 ) électriques, soient dans un rapport donné à l'avance, le dispositif ( 51 ) de commande commandant le rapport des couples de rotation, en commandant ou en régulant les intensités du courant électrique par lesquelles les moteurs ( 10, 11 ) électriques sont alimentés.

6. Sous-marin ( 100 ) suivant la revendication 5,
**caractérisé en ce que** le rapport des couples de rotation cédés peut être modifié lors du fonctionnement des moteurs ( 10, 11 ) électriques.

7. Sous-marin ( 100 ) suivant l'une des revendications précédentes,
**caractérisé en ce que** la carcasse ( 2 ) est constituée en forme de tuyère.

8. Sous-marin ( 100 ) suivant l'une des revendications précédentes,
**caractérisé en ce que** la carcasse ( 2 ) est fixée sur la coque ( 101 ) de manière mobile par rapport à la coque ( 101 ) dans au moins une direction.

9. Sous-marin ( 100 ) ayant exactement une propulsion ( 1, 40 ) suivant l'une des revendications précédentes,
**caractérisé en ce qu'**il a une coque ( 102 ), qui se prolonge, à son extrémité arrière considérée dans le sens d'écoulement, en un cône ( 104 ) de poupe, le cône ( 104 ) de poupe étant disposé dans le sens de l'écoulement, avant l'entrée ( 4 ) de la propulsion ( 1 ).

10. Sous-marin ( 100 ) ayant exactement une propulsion ( 1, 40 ) suivant l'une des revendications 1 à 8,
**caractérisé en ce qu'**il a une coque ( 102 ), qui se prolonge, à son extrémité arrière considérée dans le sens d'écoulement, en un cône ( 104 ) de poupe, le cône ( 104 ) de poupe s'étendant dans la propulsion ( 1 ) ou à travers la propulsion ( 1 ).

11. Sous-marin ( 100 ) suivant la revendication 10, **caractérisé en ce que** les extrémités des ailettes ( 23 ) du rotor ( 20 ) ou des rotors ( 20 ) de la propulsion ( 1 ou 40 ) sont montées tournantes sur le cône ( 104 ) de poupe.

12. Sous-marin ( 100 ) suivant l'une des revendications 9 à 11,
**caractérisé en ce que** le cône ( 104 ) de poupe est disposé suivant une ligne avec l'axe ( 25 ) de rotation du rotor ( 20 ) ou des rotors ( 20 ).

13. Procédé pour faire fonctionner un sous-marin ( 100 ) suivant l'une des revendications précédentes,
**caractérisé en ce que** l'on remet, au moins en partie, dans le sens ( 5 ) d'écoulement principal, par le rotor ( 20 ) du deuxième moteur ( 11 ), une sortie de l'eau qui est provoquée par le rotor ( 20 ) du premier moteur ( 10 ) et qui s'écarte du sens ( 5 ) d'écoulement principal.

14. Procédé pour faire fonctionner un sous-marin ( 100 ) suivant la revendication 13,
**caractérisé en ce que**, de préférence, pour une marche lente du sous-marin, le rotor ( 20 ) du premier moteur ( 10 ) est entraîné électriquement et le rotor ( 20 ) du deuxième moteur est maintenu fixe.

15. Procédé pour faire fonctionner un sous-marin ( 100 ) suivant la revendication 13 ou 14,
**caractérisé en ce que**, de préférence, pour une marche en croisière du sous-marin, le rotor ( 20 ) du premier moteur ( 10 ) est entraîné électriquement et le rotor ( 20 ) du deuxième moteur ( 11 ) est entraîné complètement ou au moins essentiellement par l'eau passant dans le canal ( 3 ).

16. Procédé pour faire fonctionner un sous-marin ( 100 ) suivant l'une des revendications 13 à 15,
**caractérisé en ce que**, de préférence, pour une marche à grande vitesse et/ou à de grandes profondeurs d'eau, les rotors ( 20 ) des deux moteurs ( 10, 11 ) sont entraînés électriquement, les deux rotors ( 20 ) tournant en sens contraire.
